# EUROPÄISCHE PATENTANMELDUNG

(11) **EP 4 183 659 A1**
(43) Veröffentlichungstag der Anmeldung: **24.05.2023**
(21) Anmeldenummer: 21209512.9
(22) Anmeldetag: 22.11.2021
(51) Int. Cl.: B61L 23/04, B61L 27/57, B61L 27/60, G01M 17/007, G01M 17/08, G08G 1/16

(54) **VERFAHREN UND TESTSTRECKEN ZUR ERPROBUNG DER HINDERNISERKENNUNG EINES FAHRZEUGS**

(71) Anmelder: Siemens Mobility GmbH, 81739 München (DE)
(72) Erfinder: BRABAND, Jens, 38106 Braunschweig (DE)
(74) Vertreter: Siemens Patent Attorneys

(57) **Zusammenfassung**

Gegenstand der Erfindung Verfahren zur Erprobung der Hinderniserkennung eines Fahrzeugs (FZ) auf einer Teststrecke (TS), wobei als Hindernis mindestens ein Probekörper (PK1 ... PK3) verwendet wird, der zur Durchführung einer Hinderniserkennung in den vorgesehenen Fahrweg des Fahrzeugs (FZ) hineinbewegt wird, und der zur Vermeidung einer Kollision des Fahrzeugs (FZ) mit dem Probekörper (PK1 ... PK3) aus dem Fahrweg herausbewegt wird (zum Beispiel durch Schwenken um Drehachsen A1, A2). Ferner umfasst die Erfindung eine Teststrecke (TS) zur Erprobung der Hinderniserkennung eines Fahrzeugs (FZ) sowie ein Computerprogrammprodukt und eine Bereitstellungsvorrichtung.

## Beschreibung

Die Erfindung betrifft ein Verfahren zur Erprobung der Hinderniserkennung eines Fahrzeugs auf einer Teststrecke. Außerdem betrifft die Erfindung eine Teststrecke zur Erprobung der Hinderniserkennung eines Fahrzeugs. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

In der Automobilindustrie gibt es weit verbreitete Algorithmen zur Hinderniserkennung, die aber in der offenen Straßenumgebung noch nicht zum Einsatz kommen, da in der Vergangenheit bereits Fälle von Versagen mit Unfallfolge bekannt geworden sind. Grundsätzlich erfolgt die Erkennung von Hindernissen dadurch, dass mittels einer geeigneten Sensorik (optische Sensoren, Radar, Ultraschall) Objekte im vor dem Fahrzeug liegenden Bereich als solche erkannt werden und rechnergestützt vorzugsweise durch Nutzung von künstlicher Intelligenz klassifiziert werden. Das Ergebnis der Klassifikation ist die Erkennung derjenigen Objekte, die als Hindernis zu werten sind. Ein Hindernis ist in diesem Zusammenhang ein Objekt, mit dem eine Kollision mit dem betreffenden Fahrzeug droht.

Andererseits können auch Objekte erkannt werden, die beispielsweise außerhalb des Fahrweges des Fahrzeuges stehen, weswegen keine Kollision droht. Diese werden auch nicht als Hindernis klassifiziert. Insbesondere bei Bahnstrecken gibt es eine Vielzahl von Objekten, die die Strecke säumen. Als Beispiele sind Signale, Weichen, Gleiselemente wie Balisen, Oberleitungen, Tunnel, Bahnhöfe und dergleichen zu nennen. Diese dürfen nicht als Hindernis klassifiziert werden, da das Fahrzeug ungehindert daran vorbeifahren kann.
AI Anwendungen werden derzeit nicht für Safety-Anwendungen (also Anwendungen auf einem hohen Sicherheitslevel) im Bahnbereich zugelassen, insbesondere, da ihre genaue Funktion nur schwer nachvollzogen werden kann und auch nicht die geforderten Entfernungen, die im Bahnbereich für eine Sensorik notwendig sind, abdeckt werden können. Sie können nur wie eine Black Box behandelt werden, die mit spezifischen Methoden überwacht werden muss. Dies ist ein besonderes Problem bei der Hinderniserkennung für das automatische Fahren auf der Schiene, die mit einer hohen Sicherheit erfolgen muss. Bei der Verwendung von AI kann nicht vorhergesehen werden, wie weit die Sensorik in der konkreten Situation Hindernisse erkennen kann und ob sie überhaupt ausreichend erkennungsfähig ist, und es ist nicht klar festzustellen, ob das Lichtraumprofil einer Strecke frei von Hindernissen ist.

Lichtraumprofile sind standardisierte Querschnitte der Infrastruktur. Sie gewährleisten den Raum, welcher für die uneingeschränkte Durchfahrt von Fahrzeugen und Ladungen mit bestimmten Eigenschaften und Abmessungen freizuhalten ist.

Unter künstlicher Intelligenz (im Folgenden auch mit KI abgekürzt) ist im Rahmen dieser Erfindung im engeren Sinne das rechnergestützte Machine Learning (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch für den betreffenden Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Das maschinelle Lernen kann beispielsweise durch künstliche neuronale Netze (im Folgenden für artificial neural network, kurz ANN genannt) durchgeführt werden. Künstliche neuronale Netze basieren meist auf der Vernetzung vieler Neuronen, beispielsweise McCulloch-Pitts-Neuronen oder leichter Abwandlungen davon. Grundsätzlich können auch andere künstliche Neuronen Anwendung in ANN finden, z. B. das High-Order-Neuron. Die Topologie eines Netzes (die Zuordnung von Verbindungen zu Knoten) muss abhängig von seiner Aufgabe bestimmt werden. Nach der Konstruktion eines Netzes folgt die Trainingsphase, in der das Netz "lernt". Dabei kann ein Netz beispielsweise durch folgende Methoden lernen:
- Entwicklung neuer Verbindungen
- Löschen existierender Verbindungen
- Ändern der Gewichtung (der Gewichte von Neuron j zu Neuron i)
- Anpassen der Schwellenwerte der Neuronen, sofern diese Schwellwerte besitzen
- Hinzufügen oder Löschen von Neuronen
- Modifikation von Aktivierungs-, Propagierungs- oder Ausgabefunktion

Außerdem verändert sich das Lernverhalten bei Veränderung der Aktivierungsfunktion der Neuronen oder der Lernrate des Netzes. Praktisch gesehen lernt ein ANN hauptsächlich durch Modifikation der Gewichte der Neuronen. Eine Anpassung des Schwellwertes kann hierbei durch ein on-Neuron miterledigt werden. Dadurch sind ANN in der Lage, komplizierte nichtlineare Funktionen über einen Lernalgorithmus, der durch iterative oder rekursive Vorgehensweise aus vorhandenen Ein- und gewünschten Ausgangswerten alle Parameter der Funktion zu bestimmen versucht, zu erlernen. ANN sind dabei eine Realisierung des konnektionistischen Paradigmas, da die Funktion aus vielen einfachen gleichartigen Teilen besteht. Erst in ihrer Summe wird das Verhalten komplex.

Die dargestellten Probleme machen es erforderlich, dass eine automatische Hinderniserkennung vor ihrem sicherheitsrelevanten Einsatz unter Realbedingungen getestet wird. Beispielsweise hat die Deutsche Bahn im Internet einen Artikel mit dem Titel "Ein ICE in Lichterfelde: DB-Versuchszug fährt auf der Berliner Goerzbahn" veröffentlicht:
https://www.deutschebahn.com/pr-berlin-de/aktuell/presseinform ationen/Ein-ICE-in-Lichterfelde-DB-Versuchszug-faehrt-auf-der-Berliner-Goerzbahn--5888114.

Danach soll eine im Augenblick ungenutzte Strecke in Berlin-Lichterfelde für die Erprobung von Hinderniserkennungssystemen mit einem Versuchszug der Deutschen Bahn, dem sogenannten advanced TrainLab, einem dieselgetriebenen ICE der Baureihe 605, verwendet werden. Nach Angaben der Bahn biete die 2,5 km lange Strecke optimale Voraussetzungen, um verschiedene Systeme zur Objekt- und Hinderniserkennung sowie zur Umfeld-Wahrnehmung zu erproben. Es gebe rund 40 Stellen, an denen der Autoverkehr den Streckenabschnitt quere.

Bei einer Erprobung im realen Umfeld bestehen jedoch hohe Anforderungen an die Sicherheit. Insbesondere kann eine Erprobung nur mit geringer Geschwindigkeit erfolgen, damit Unfälle mit realen Verkehrsteilnehmern gegebenenfalls durch eine Notbremsung verhindert werden können.

Die Aufgabe der Erfindung ist es, Verfahren zur Erprobung der Hinderniserkennung eines Fahrzeugs auf einer Teststrecke anzugeben, welches unter möglichst realistischen Bedingungen (insbesondere hinsichtlich realisierter Geschwindigkeiten) ablaufen kann und dabei hohe Anforderungen an die Sicherheit (Safety) erfüllt. Außerdem ist es Aufgabe der Erfindung eine Teststrecke anzugeben, welche ein solches Verfahren ausführen kann. Zuletzt besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass als Hindernis mindestens ein Probekörper verwendet wird, der zur Durchführung einer Hinderniserkennung in den vorgesehenen Fahrweg des Fahrzeugs hineinbewegt wird, und der zur Vermeidung einer Kollision des Fahrzeugs mit dem Probekörper aus dem Fahrweg herausbewegt wird.

Dadurch, dass die Probekörper in den vorgesehenen Fahrweg des Fahrzeugs hineinbewegt und wieder herausbewegt werden, können definierte Testbedingungen für die Erprobung der Hinderniserkennung des Fahrzeuges geschaffen werden. Die Probekörper sind dadurch, dass sie an einer zum Hineinbewegen und Herausbewegen geeigneten Bewegungsmechanik befestigt sind, an einer definierten Position der Teststrecke angeordnet. Dies ermöglicht es insbesondere, die Teststrecke in einem Streckenabschnitt eines real existierenden Verkehrsnetzes unterzubringen (hierzu im Folgenden noch mehr); dies macht eine Testprozedur unter möglichst realitätsnahen Bedingungen möglich
- auch bei höheren Geschwindigkeiten, das Kollisionen mit den Probekörpern durch deren Herausbewegen vermieden werden können.

Außerdem können die Probekörper immer dann in den Fahrweg hinein bewegt werden, wenn eine Testprozedur (Verfahren zur Erprobung der Hinderniserkennung eines Fahrzeugs) durchgeführt werden soll. Andererseits können die Probekörper aus dem Fahrweg herausbewegt werden, wenn während der Testprozedur eine Kollision des in Erprobung befindlichen Fahrzeugs mit den Probekörpern droht. Hierdurch kann vorteilhaft die Sicherheit vor Kollisionen bei der Testprozedur erhöht werden, sodass Fehler bei der Hinderniserkennung keine negativen Auswirkungen haben. Damit wird eine Sicherheit vor Unfällen vorteilhaft erhöht.

Zusätzlich können die Probekörper aus einem Leichtbaumaterial gefertigt werden. Hierdurch wird vorteilhaft sichergestellt, dass eine Kollision, sollte diese ungewollt stattfinden, an dem Fahrzeug keinen oder nur geringen Schaden anrichtet. Dafür wird durch das Fahrzeug der Probekörper zerstört, welcher im Vergleich zur Reparatur des Fahrzeugs kostengünstig ersetzt werden kann.

Die Objekte, die gemäß dem erfindungsgemäßen Verfahren erkannt werden sollen, sind diejenigen, deren Position vorzugsweise aufgrund beispielsweise eines Streckenatlasses als Probekörper bekannt sind. In diesem Fall kann für den Fall, dass diese Objekte nicht an der zu erwartenden Position erkannt werden, darauf geschlossen werden, dass die Hinderniserkennung nicht einwandfrei funktioniert.

Das erfindungsgemäße Verfahren kann unterstützt werden, wenn eine AI durch ein Modell, das mit a-priori-Information eines Streckenatlasses angereichert wird, zu Testzwecken gestützt wird. Es wird insbesondere für eine Streckenfreimeldung, insbesondere Lichtraumprofilfreimeldung genutzt, d. h. es sollen explizit die Probekörper erfasst werden, damit alle erwartungsgemäß vorhandenen Objekte (Probekörper) durch einen Streckenatlas definiert werden können.

Bei der Modellbildung für die Hinderniserkennung wird zumindest ein Teil der folgenden Annahmen berücksichtigt, die sowohl beim Testen auf der Teststrecke als auch im späteren Realbetrieb berücksichtigt werden:
- Es gibt bekannte Objekte in der Umgebung der Teststrecke, deren Natur bekannt ist. Das könnte z. B. ein Signal sein, oder Tafeln oder Landmarken. Diese können weitere Eigenschaften besitzen wie z. B. Farbe der Tafel, Symbole auf der Tafel, Reflexionsvermögen (für Licht oder Radarstrahlung).
- Es gibt Anforderungen an das Sichtfeld, z. B. welche Entfernung abgedeckt werden soll (Mindestabstand) und welche Art von Objekten erkannt werden soll. Diese können dynamisch von der Position des Fahrzeugs abhängen (es kann z. B. nicht um die Kurve "blicken"). Für die zu erkennenden Objekte sind charakteristische Muster bekannt, vorzugsweise auch für

Hindernisse, z. B. auf der Teststrecke liegende Bäume.
- Die Objekte sind in einem Streckenatlas enthalten (z. B. über einen Vektor am Fußpunkt des Gleises), vorzugsweise eindeutig relativ zum die Strecke bildenden Gleis, auf dem das Fahrzeug fährt.
- Ein oder mehrere Sensoren auf dem Fahrzeug erfassen die Umgebung.
- Es gibt für das Fahrzeug eine Ortung mit einer bekannten Genauigkeit.
- Ein AI-Algorithmus erkennt die Objekte und extrahiert die gewünschten Eigenschaften der Objekte, insb. deren Umrisse, ggf. bereinigt von Überschneidungen oder Störungen
- Ein sicherer Rechner trifft daraufhin Entscheidungen, z. B. die Ansteuerung der Bremse zur Notbremsung (zumindest im Normalbetrieb, bei der Erkennung von Probekörpern kann die Einleitung von kollisionsverhütenden Maßnahmen deaktiviert werden, zum Beispiel durch eine zentrale Steuereinheit für das Verfahren zur Erprobung wie eine Leitzentrale.

Das Fahrzeug ortet sich auf der Strecke oder wird auf der Strecke geortet. Daher ist auch die Gleislage bezüglich des Streckenatlasses bekannt. Anhand des Streckenatlasses und der Ungenauigkeit kann man dann die Wahrscheinlichkeitsverteilung der Position der Objekte ermitteln. Insbesondere kann auch die Entfernung zum Objekt geschätzt werden. Der AI-Algorithmus liefert vorzugsweise alle erkannten Objekte sowie deren Umrisse.

Der Streckenatlas ist dadurch gekennzeichnet, dass er zu erkennenden Probekörper in Relation zu ihrer Position an der Strecke abbildet bzw. beschreibt. Hierbei können unterschiedliche Formate gewählt werden. Im einfachsten Fall ist der Streckenatlas eindimensional ausgebildet, beispielsweise als Tabelle, enthaltend die Objekte und deren Position an der Strecke ohne Berücksichtigung des Streckenverlaufes (ausgedrückt als Streckenangabe beispielsweise in Metern). Eine solche Darstellung ist eindimensional.

Der Streckenatlas kann auch zweidimensional ausgebildet sein. Dabei kann der Streckenverlauf an der Erdoberfläche berücksichtigt werden. Hierbei handelt es sich um eine zweidimensionale Projektion. Zuletzt kann der Streckenverlauf auch dreidimensional im Streckenablass abgebildet sein. Hierbei lassen sich auch die Höhenunterschiede der Strecke erfassen. Außerdem kann die Position der zu erkennenden Objekte auch hinsichtlich ihrer Höhe über dem Gleis definiert werden. Der dreidimensionale Streckenatlas kann insbesondere als virtuelle Realität abgebildet werden.

Als virtuelle Realität, (im Folgenden kurz VR), wird die Darstellung der Wirklichkeit (auch als physische Realität bezeichnet) in einer in Echtzeit computergenerierten, interaktiven virtuellen Umgebung bezeichnet. Wie detailliert die VR erzeugt werden muss, hängt vom individuellen Anwendungsfall ab. Im Allgemeinen wird die VR einem dreidimensionalen Raum erzeugt und bildet dessen physikalischen Eigenschaften, insbesondere Topographie, vereinfacht ab.

Voraussetzung für die Anwendung einer VR ist die Kenntnis des Ortes und der Blickrichtung des Betrachters. Dieser muss infolgedessen geortet werden. Wird eine VR für den Schienenverkehr verwendet ergeben sich hierbei gewisse Vereinfachungen. Beispielsweise ist das Sichtfeld eines Zugführers durch die Frontscheibe klar definiert, sodass durch eine Ortung des Zuges bereits der darzustellende Bildausschnitt der VR festgestellt werden kann. Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass die Teststecke spurgebunden ist und der Fahrweg durch ein Lichtraumprofil vorgegeben wird.

Als spurgebundenen Teststrecke kommen insbesondere Gleise für den Zugverkehr infrage. Demgemäß ist das Fahrzeug ein spurgebundenes Fahrzeug, also eine Lokomotive, ein Wagen oder ein Zug.

Die Verwendung des erfindungsgemäßen Verfahrens für spurgebundene Fahrzeuge hat den Vorteil, dass eine automatische Hinderniserkennung für diesen Fall einfacher ist als beispielsweise für Straßenfahrzeuge. Dies hängt damit zusammen, dass sich spurgebundene Fahrzeuge nur entlang der Spurbindung bewegen können (Verringerung der Zahl von Freiheitsgraden) und auf Gleisen, die einen geschützten Bereich darstellen, weniger unvorhergesehene Hindernisse auftreten können als beispielsweise im Straßenverkehr.

Die im Zusammenhang mit dieser Erfindung gemachten Aussagen gelten insbesondere für spurgebundenen Fahrzeuge, lassen sich allerdings auch auf andere Verkehrsarten, insbesondere den Straßenverkehr, übertragen.

Gemäß einer Ausgestaltung der Erfindung ist vorgesehen, dass der mindestens eine Probekörper rechnergestützt automatisch in den vorgesehenen Fahrweg hineinbewegt und/oder herausbewegt wird.

Vorteilhaft profitiert das erfindungsgemäße Verfahren von einer automatischen Ansteuerung der Probekörper. Insbesondere kann hierdurch sichergestellt werden, dass diese rechtzeitig in den vorgesehenen Fahrweg hineinbewegt werden (damit diese im der Prüfprozedur erkannt werden können) und vor allem auch rechtzeitig aus dem vorgesehenen Fahrweg heraus bewegt werden können (damit Unfälle in Form von Kollisionen vermieden werden können).

Um das Hineinbewegen und Herausbewegen der Probekörper zu automatisieren, ist ein motorischer Antrieb für den Bewegungsmechanismus der Probekörper erforderlich. Außerdem muss der Antrieb durch eine geeignete Steuervorrichtung angesteuert werden, die durch das erfindungsgemäße Verfahren kontrolliert wird. Um eine rechtzeitige Aktivierung bzw. Deaktivierung der Probekörper als Hindernis (d. h. hineinbewegen und herausbewegen) zu gewährleisten, können überdies vorteilhaft Sensoren an der Teststrecke oder im Fahrzeug vorgesehen sein, die Sensorsignale bezüglich einer Fahrzeugposition generieren bzw. ausgeben, wobei die besagte Steuervorrichtung unter Auswertung der Sensorsignale die Probekörper bzw. den motorischen Antrieb ansteuert.

Gemäß einer Ausgestaltung der Erfindung ist vorgesehen, dass der mindestens eine Probekörper unter Berücksichtigung einer ermittelten Fahrzeugposition in den vorgesehenen Fahrweg hineinbewegt und/oder herausbewegt wird.

Es ist von Vorteil, wenn die Fahrzeugposition zur Steuerung des Ablaufs der Prüfprozedur bekannt ist. Die Fahrzeugposition kann alternativ durch eine Übertragung seitens des Fahrzeugs (wenn dieses seine Fahrzeugposition kennt) oder durch an der Prüfstrecke verbaute Sensoren ermittelt werden.

Die Fahrzeugposition kann vorteilhaft dazu genutzt werden, die Probekörper zum rechten Zeitpunkt zu aktivieren und deaktivieren. Dabei ist zu berücksichtigen, dass die Probekörper möglichst spät aktiviert werden, jedoch früh genug, damit eine fehlerfreie Erkennung durch die Hinderniserkennung ermöglicht wird; andererseits so spät wie möglich, um das Unfallrisiko möglichst gering zu halten. Außerdem müssen die Probekörper rechtzeitig deaktiviert werden, um eine Kollision des Probekörpers mit dem herannahenden Fahrzeug zu verhindern.

Gemäß einer Ausgestaltung der Erfindung ist vorgesehen, dass das Fahrzeug eine Nachricht erhält, dass das Verfahren zur Erprobung der Hinderniserkennung durchgeführt wird.

Die Nachricht kann durch das Fahrzeug vorteilhaft dahingehend verarbeitet werden, dass dieses fahrzeugseitig die Prüfprozedur vorbereitet. Die Vorbereitung kann beispielsweise darin bestehen, dass eine Software gestartet wird, die fahrzeugseitig die Prüfprozedur unterstützt. Beispielsweise kann die Software bestimmte Sicherheitsreaktionen, die bei Erkennung von realen Hindernissen ausgelöst werden, außer Kraft setzen, damit diese nicht durch die Probekörper ausgelöst werden (Zum Beispiel eine Notbremsung). Dies setzt allerdings voraus, dass die Teststrecke dahingehend geschützt wird, dass das Vorhandensein von realen Hindernissen ausgeschlossen werden kann oder zumindest sehr unwahrscheinlich ist (Hierzu im Folgenden noch mehr).

Gemäß einer Ausgestaltung der Erfindung ist vorgesehen, dass das Ergebnis der Hinderniserkennung rechnergestützt ausgewertet wird. Gemäß einer weiteren Ausgestaltung der Erfindung ist vorgesehen, dass das Ergebnis der Hinderniserkennung zumindest unter Berücksichtigung des örtlichen oder zeitlichen Abstandes ausgewertet wird, den das Fahrzeug bei der Erkennung des Hindernisses von dem Probekörper aufweist.

Das Auswertungskriterium, dass der örtliche oder zeitlicher Abstand ausgewertet wird, lässt vorteilhaft einen Rückschluss darauf zu, ob ein reales Hindernis rechtzeitig oder mit einer genügenden Entfernung zum Hindernis erkannt werden würde, damit zum Beispiel eine Notbremsung ausgelöst werden könnte, um eine Kollision mit dem realen Hindernis zu verhindern. Diese Auswertung basiert auf der Erkennung des Probekörpers, der das reale Hindernis repräsentiert. Dieser soll die Bedingungen, unter der das reale Hindernis erkannt werden würde, möglichst gut imitieren.

Wahlweise kann der örtliche oder der zeitliche Abstand ausgewertet werden. Der örtliche Abstand betrifft einen Ort, der einen Längenabstand von dem Probekörper aufweist. Der zeitliche Abstand betrifft die Zeit, die vergeht, bis das Fahrzeug von dem Punkt, von dem der zeitliche Abstand gemessen wird, bis zum Erreichen des Probekörpers benötigt. Es ist darauf hinzuweisen, dass der örtliche Abstand in den zeitlichen Abstand umgerechnet werden kann und umgekehrt, wenn die örtlichen Gegebenheiten, insbesondere die Position des Zuges und die Position des Probekörpers, sowie die Geschwindigkeit und gegebenenfalls die Beschleunigung des Zuges bekannt sind.

Gemäß einer Ausgestaltung der Erfindung ist vorgesehen, dass das Ergebnis der Hinderniserkennung zumindest unter Berücksichtigung der erkannten Art des Hindernisses in Bezug auf die Art des Probekörpers ausgewertet wird.

Bei diesem Auswertungskriterium geht es darum, dass die Art des Hindernisses, die der Probekörper repräsentiert, zuverlässig erkannt wird. Als Art des Hindernisses können im weitesten Sinne bestimmte Gattungen von Hindernissen, beispielsweise Fahrzeuge auf der Schiene, umgestürzte Bäume, Tiere, Ladung, usw. verstanden werden, oder auch individuelle Eigenschaften, wie zum Beispiel bestimmte Züge (Personenzüge, Güterzüge) in Abhängigkeit des Fahrplans verstanden werden.

Gemäß einer Ausgestaltung der Erfindung ist vorgesehen, dass für den örtlichen oder zeitlichen Abstand ein Mindestabstand oder ein Detektionsfenster vorgegeben wird, vor dem oder in dem das Ergebnis der Hinderniserkennung erzeugt werden muss.

Der Mindestabstand muss so bemessen sein, dass die Sicherheitsmaßnahme, bei der es sich bevorzugt um eine Notbremsung handeln kann, wirksam eingeleitet werden kann, um einen Unfall zu verhüten. So lässt sich beispielsweise der geschwindigkeitsabhängige Bremsweg bei einer Notbremsung des Fahrzeuges zuzüglich der Wegstrecke, die das Fahrzeug während der Durchführung des erfindungsgemäßen Verfahrens zur Erkennung des Hindernisses und/oder bis zum Einsetzen der Sicherheitsmaßnahme zurücklegt, als Mindestabstand definieren.

Ein Detektionsfenster legt den räumlichen Bereich fest, innerhalb dessen es zur Erkennung eines Probekörpers als Hindernis kommen soll. Insbesondere kann das Detektionsfenster auf der Seite des zu detektieren Probekörpers auch durch den Mindestabstand vorgegeben werden, da eine Detektion innerhalb des Mindestabstandes nicht erlaubt ist. Allerdings kann das Detektionsfenster auf der Seite des zu detektieren Probekörpers auch weiter als der Mindestabstand von dem Probekörper entfernt sein.

Der Mindestabstand oder das Detektionsfenster wird also vorgegeben. Bei dieser Vorgabe ist ein sicherer Betrieb des Fahrzeugs zu berücksichtigen. Deswegen kann der Mindestabstand variabel bestimmt werden, abhängig von der Streckensituation und Betriebssituation. Beispielsweise kann der Mindestabstand mit steigender Geschwindigkeit des Fahrzeugs vergrößert werden, da mit der Geschwindigkeit auch der Bremsweg größer wird. Der Mindestabstand kann beispielsweise in Kurven bedingt durch eine Wettersituation oder die Krümmung der Strecke aufgrund der geographischen Gegebenheiten verringert sein. Gleichzeitig wird in Kurven allerdings auch langsamer gefahren.

Gemäß einer Ausgestaltung der Erfindung ist vorgesehen, dass der mindestens eine Probekörper in den Fahrweg hineingeschwenkt und herausgeschwenkt wird.

Schwenken ist vorteilhaft eine zuverlässige Methode, um den Probekörper in den Fahrweg hineinzubewegen und herauszubewegen. Dabei wird eine vorzugsweise waagerechte oder senkrechte Drehachse definiert, um die herum der Probekörper geschwenkt wird. Hierbei können einfache Antriebe verwendet werden, welche im Bedarfsfall auch eine schnelle Bewegung des Probekörpers erlauben, um zum Beispiel eine Kollision bei Annäherung des Fahrzeugs möglichst lange noch verhindern zu können. Grundsätzlich ist allerdings auch die Verwendung von translatorischer Aktorik denkbar (beispielsweise Führungsschienen und Linearmotoren).

Gemäß einer Ausgestaltung der Erfindung ist vorgesehen, dass auf der Teststrecke das Entstehen von nicht durch Probekörper gebildeten Hindernissen verhindert wird.

Wie bereits erwähnt, ermöglicht die Verhinderung der Entstehung von realen Hindernissen auf der Teststrecke ein störungsfreies Testen der Hinderniserkennung des Fahrzeugs durch die Probekörper. Dabei können Sicherheitsmaßnahmen, die im Regelbetrieb jederzeit greifen müssen, außer Kraft gesetzt werden, wenn garantiert werden kann, dass Hindernisse von der Teststrecke ferngehalten werden. Dies kann beispielsweise dadurch sichergestellt werden, dass die Teststrecke mit einer Barriere BA wie zum Beispiel einem Zaun umgeben ist. Weiterhin können Objekte am Rand der Strecke (beispielsweise Bäume) regelmäßig auf ihre Stabilität überwacht werden, um eine Blockierung der Strecke beispielsweise durch Umstürzen von vornherein zu verhindern.

Die genannte Aufgabe wird alternativ mit dem eingangs angegebenen Anspruchsgegenstand (Teststrecke) erfindungsgemäß auch dadurch gelöst, dass als Hindernis mindestens ein Probekörper verwendet wird, der zur Durchführung einer Hinderniserkennung in den vorgesehenen Fahrweg des Fahrzeugs hineinbewegbar ist, und der zur Vermeidung einer Kollision des Fahrzeugs mit dem Probekörper aus dem Fahrweg herausbewegbar ist, wobei die Teststrecke eingerichtet ist, ein Verfahren gemäß einem der voranstehenden Ansprüche durchzuführen.

Gemäß einer Ausgestaltung der Erfindung ist vorgesehen, dass dieser integrativer Bestandteil eines Verkehrsnetzes für das Fahrzeug ist.

Die Tatsache, dass Probekörper für die Testprozedur der Hinderniserkennung verwendet werden, birgt, wie bereits erläutert, den Vorteil, dass eine eventuelle Kollision aufgrund einer unvollständigen Funktion der Hinderniserkennung keine schwerwiegenden Folgen hat. Deswegen kann die Hinderniserkennung auch auf einer Teststrecke erfolgen, die zum Verkehrsnetz des betreffenden Fahrzeugs gehört. Mit anderen Worten ist die Teststrecke kein eigener Aufbau, sondern ein Abschnitt des Verkehrsnetzes, welcher Realbedingungen zum Testen bietet. Außerdem ist die Investitionen in die Teststrecke aus diesem Grund geringer, da diese lediglich durch Ergänzung von Probekörpern aufgebaut werden kann. Gegebenenfalls ist außerdem die bereits erwähnte Sicherung der Teststrecke vor dem Auftreten realer Hindernisse durchzuführen.

Mit der Vorrichtung lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Vorrichtung.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Vorrichtung (Teststrecke) mit ihren Wirkzusammenhängen schematisch,
Figur 2 ein schematisches Beispiel für ein Lichtraumprofil, welches als Probekörper einen umgestürzten Baum gemäß Figur 1 darstellt.
Figur 3 ein Lichtraumprofil, welches als Probekörper ein auf dem Gleis befindliches Fahrzeug darstellt.
Figur 4 ein Ausführungsbeispiel einer Computer-Infrastruktur für eine Rechenumgebung der Vorrichtung gemäß Figur 1 als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,
Figur 5 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 4 beispielhaft angedeutet sind.

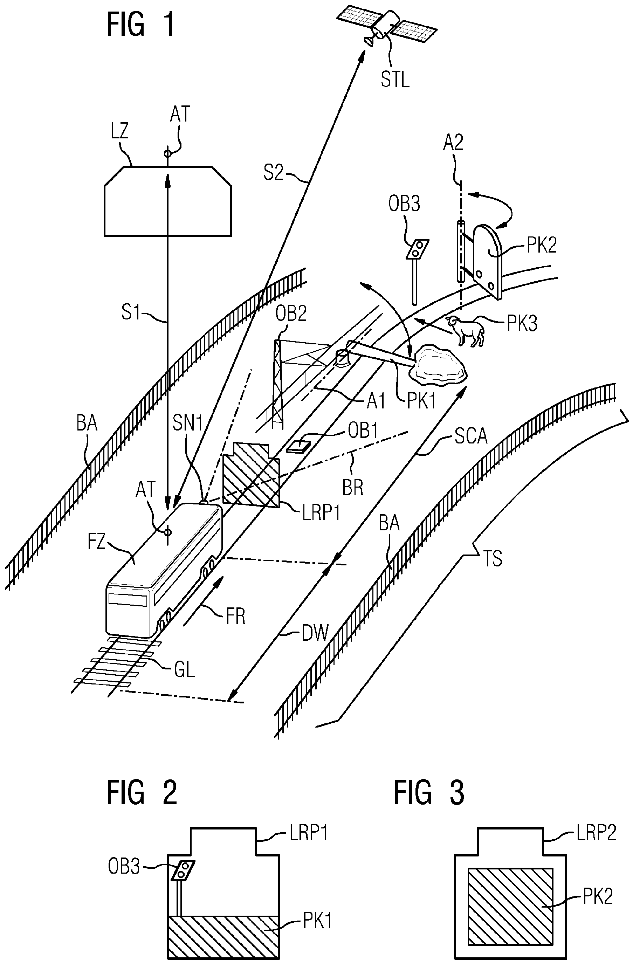

In Figur 1 ist ein Fahrzeug FZ dargestellt, welches in einer Fahrtrichtung FR auf einem Gleis GL unterwegs ist. Dieses Fahrzeug FZ weist einen ersten Sensor SN1 an der Vorderseite auf, welcher in einer Blickrichtung BR, angedeutet als optischer Aperturwinkel mit Strichpunktlinien als Winkelschenkel, Prüfkörper PK1 ... PK3 auf und an dem Gleis GL erfassen kann.

In Figur 1 sind außerdem viele verschiedene Objekte, die potenziell ebenfalls erfasst werden können, dargestellt. Bei dem ersten Objekt OB1 handelt es sich um eine im Gleis GL verbaute Balise. Bei dem zweiten Objekt OB2 handelt es sich um einen Mast für eine Oberleitung. Dieser ist exemplarisch dargestellt, wobei die durch das Gleis GL gebildete Strecke selbstverständlich eine Vielzahl solcher Masten begleitet, welche durch den ersten Sensor SN1 erfasst werden können. Bei dem dritten Objekt OB3 handelt es sich um ein Signal.

Das Fahrzeug FZ weist eine Antenne AT auf, und ist über Funk über eine erste Schnittstelle S1 mit einer Antenne AT einer Leitzentrale LZ sowie über eine zweite Schnittstelle S2 mit einem Satelliten STL verbunden. Der Satellit gehört vorzugsweise zu einem Navigationssystem (beispielsweise GPS), sodass das Fahrzeug FZ selbstständig seine Position ermitteln kann. Über die Leitzentrale LZ können beispielsweise Fahrplandaten sowie ein Streckenatlas an das Fahrzeug FZ übertragen werden (hierzu im Folgenden mehr).

Auf dem Gleis GL liegt weiterhin ein erster Probekörper PK1 in Form eines umgestürzten Baumes. Betrachtet man ein erstes Lichtraumprofil LPR1, welches in Figur 1 dargestellt ist, so wird innerhalb dieses Lichtraumprofils ein Bild des ersten Probekörpers PK1 erkannt werden können.

In Figur 2 ist das erste Lichtraumprofil LPR1 dargestellt. Der erste Probekörper PK1 erscheint als schraffierte Fläche, wobei deren genaue Gestalt bei dem erfindungsgemäßen Verfahren nicht erkannt wird. Abhängig von Wirkprinzip und Güte des ersten Sensors SN1 wird das Bild genauer oder weniger genau sein.

Figur 3 stellt ein zweites Lichtraumprofil LRP2 dar, welches nicht in Figur 1 gekennzeichnet ist. In diesem befindet sich beispielhaft ein zweiter Probekörper, welches das Lichtraumprofil LRP2 fast vollständig ausfüllt. Hier kann auf einen ein weiteres Fahrzeug repräsentierenden zweiten Probekörper PK2 auf dem Gleis GL geschlossen werden.

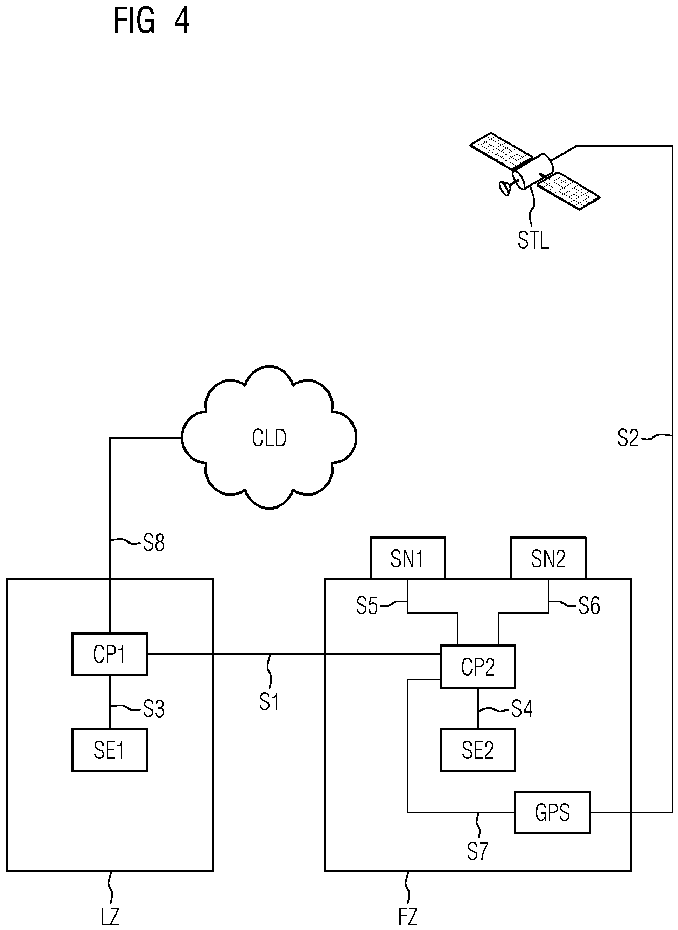

In Figur 4 ist eine Computerinfrastruktur dargestellt, die zur Durchführung des erfindungsgemäßen Verfahrens geeignet ist. Programmmodule können hierbei durch einen ersten Computer CP1 in der Leitzentrale LZ, durch einen zweiten Computer CP2 im Fahrzeug FZ und innerhalb einer Cloud CLD abgearbeitet werden.

Die Leitzentrale LZ besitzt einen ersten Computer CP1, der über eine dritte Schnittstelle S3 mit einer ersten Speichereinrichtung SE1 verbunden ist. Außerdem ist der erste Computer CP1 über eine achte Schnittstelle S8 mit der Cloud CLD verbunden. Wie bereits erwähnt, ist der erste Computer CP1 über eine erste Schnittstelle S1 mit einem zweiten Computer CP2 des Fahrzeugs FZ verbunden.

Der zweite Computer CP2 weist eine vierte Schnittstelle S4 zu einer zweiten Speichereinrichtung SE2 auf. Außerdem ist in dem Fahrzeug FZ ein Ortungsmodul GPS vorgesehen, welches über eine siebte Schnittstelle S7 mit dem zweiten Computer CP2 sowie über die zweite Schnittstelle S2 mit dem Satelliten SEL verbunden ist. Das Fahrzeug FZ weist außerdem einen ersten Sensor SN1, beispielsweise eine Kamera, und einen zweiten Sensor SN2, beispielsweise ein Radar, auf. Die Sensordaten des ersten Sensors SN1 werden über eine fünfte Schnittstelle S5 und die Sensordaten des zweiten Sensors SN2 über eine sechste Schnittstelle S6 an den zweiten Computer CP2 übertragen.

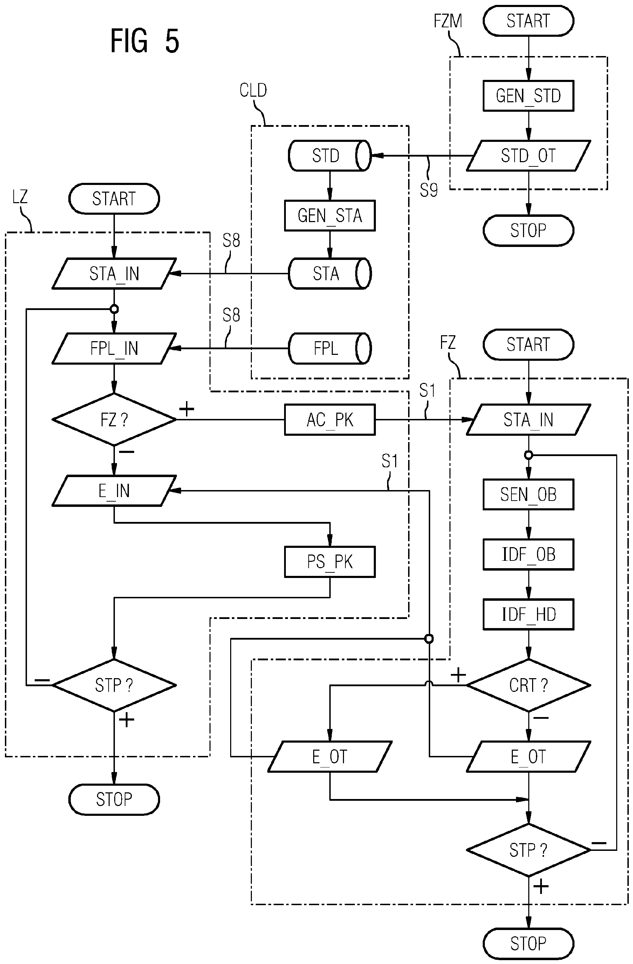

Figur 5 zeigt ein Ausführungsbeispiel für einen Verfahrensablauf des erfindungsgemäßen Verfahrens, ergänzt um einige vorbereitende Abläufe. Dargestellt ist die Cloud CLD, die einen Dienst zur Erstellung eines Streckenatlasses STA zur Verfügung stellt (Dieser ist zur Durchführung des erfindungsgemäßen Verfahrens vorgesehen). Zu diesem Zweck wird durch ein Messfahrzeug FZM eine Messfahrt durchgeführt, die nach einem Start des Verfahrens in einem Erzeugungsschritt für Streckendaten GEN STD Streckendaten erzeugt, bei denen es sich beispielsweise um die digitalen Bilder von Streckenausschnitten handelt (mit den aktivierten Probekörpern). Diese können in einem Ausgabeschritt für Streckendaten STD_OT über eine Schnittstelle S9 an die Cloud CLD übertragen werden und dort gespeichert werden. An die Cloud CLD ist weiterhin ein nicht näher dargestellter Dienstleister angeschlossen, welcher in einem Erzeugungsschritt für den Streckenatlas GEN STA einen Streckenatlas erstellt. Dieser kann insbesondere aus einer virtuellen Realität VR bestehen, also einer dreidimensionalen Darstellung des Umfelds der Strecke. Alternativ ist es möglich, eine zweidimensionale oder sogar eindimensionale Darstellung zu wählen. Der Streckenatlas STA wird in der Cloud CLD abgespeichert.

Nachdem in der Leitzentrale LZ das Verfahren gestartet wurde, wird der Streckenatlas STA über die achte Schnittstelle S8 in einem Eingabeschritt für den Streckenatlas STA_IN zur Verfügung gestellt. Außerdem wird in einem Eingabeschritt für den Fahrplan FPL_IN ebenfalls über die achte Schnittstelle S8 aus der Cloud CLD ein Fahrplan FPL geladen.

In einem darauffolgenden Abfrageschritt FZ? wird geklärt, ob sich ein Fahrzeug im Einsatz befindet und die Testprozedur durchführen soll. Ist dies nicht der Fall, wird in einem Abfrageschritt für das Verfahrensende FTP? abgefragt, ob das Betriebsverfahren in der Leitzentrale LZ beendet werden soll. Ist dies der Fall, wird das Verfahren gestoppt. Ist dies nicht der Fall, so wird in einem weiteren Eingabeschritt FPL_IN eine Erneuerung der Fahrplandaten vorgenommen und das Verfahren beginnt von Neuem.

Wenn das Fahrzeug FZ gestartet wurde, führt der Abfrageschritt FZ? dazu, dass der Leitzentrale LZ bestätigt wird, dass ein Fahrzeug zum Durchführen der Testprozedur im Einsatz ist, sodass der Streckenatlas STA über die erste Schnittstelle S1 in einem Eingabeschritt für den Fahrplan STA_IN eingelesen werden kann. Anschließend erfolgt im Fahrzeug ein Erfassungsschritt für Objekte SEN_OB, bei dem Sensordaten zur Erkennung der Probekörper erzeugt werden. In einem nachfolgenden Erkennungsschritt für Objekte IDF_OB werden die Sensordaten dahingehend verarbeitet, dass vor dem Fahrzeug FZ liegende Probekörper erkannt werden.

In einem nachfolgenden Erkennungsschritt für Hindernisse IDF_HD wird ein Abgleich der im vorhergehenden Erkennungsschritt für Objekte IDF_OB gefundenen Probekörper mit den aufgrund einer Auswertung des Streckenatlas STA zu erwartenden Hindernissen (die bei der Testprozedur durch Probekörper gebildet werden) durchgeführt. Hierbei geht in nicht dargestellter Weise die Kenntnis der Fahrzeugposition ein. Ein Hindernis wird identifiziert, wenn ein Probekörper, dessen Erkennung aufgrund der Kenntnis des Streckenatlasses zu erwarten wäre, im Blickfeld BF des Fahrzeugs erkannt werden kann. Hierbei wird zum Beispiel der in Figur 1 dargestellte Sicherheitsabstand SCA berücksichtigt, der ein Maß für den kleinsten Abstand vom Fahrzeug und somit auch den spätesten Zeitpunkt darstellt, wann ein Objekt erkannt worden sein muss. Also spätestens, wenn dieses in den Sicherheitsabstand SCA eindringt.

Wurde ein Hindernis erkannt, wird in einem Abfrageschritt für kritische Hindernisse CRT? geprüft, ob das Hindernis ein Problem für das herannahende Fahrzeug darstellt. Dies ist insbesondere der Fall, wenn der Probekörper in das Lichtraumprofil hineinragt. Ist das Hindernis nicht kritisch wird das Ergebnis in einem Ausgabeschritt für das Ergebnis E_OT an die Leitzentrale ausgegeben (dort erfolgt ein entsprechnder Eingabeschtitt E_IN) und es wird in einem Abfrageschritt für das Verfahrensende ermittelt, ob der Betrieb des Fahrzeugs FZ beendet wurde. Ist dies der Fall, wird das Verfahren gestoppt. Ist dies nicht der Fall, beginnt der geschilderte Verfahrensablauf mit dem Erfassungsschritt für Objekte SEN_OB von neuem.

Handelt es sich um ein kritisches Hindernis, wird in einem nächsten Schritt in einem Ausgabeschritt für das Ergebnis E_OT über die erste Schnittstelle S1 eine Mitteilung an die Leitzentrale LZ, die nach dem Eingabeschritt für das Ergebnis E_IN beipielsweise eine Analyse vornimmt (in Figur 5 nicht dargestellt). Bei einem kritischen Hindernis wird eine Sicherheitsmaßnahme (zum Beispiel eine Notbremsung) unterdrückt und stattdessen der Probekörper rechtzeitig deaktiviert (aus der Teststrecke herausbewegt), um eine Kollision zu verhindern.

### Bezugszeichenliste

- LZ: Leitzentrale
- FZ: Fahrzeug
- FZM: Messfahrzeug
- FR: Fahrtrichtung
- BR: Blickrichtung
- GL: Gleis
- TS: Teststrecke
- AT: Antenne
- STL: Satellit
- BA: Barriere
- PK1 ... PK3: Probekörper
- SCA: Mindestabstand
- DW: Detektionsfenster
- LRP1 ... LRP2: Lichtraumprofil
- A1 ... A2: Drehachse
- TR: Schiebemechanismus

- CP1 ... CP2: Computer
- SE1 ... SE: Speichereinrichtung
- SN1 ... SN: Sensor
- S1 ... S: Schnittstelle
- CLD: Cloud
- GPS: Ortungsmodul

- STA: Streckenatlas
- STD: Streckendaten
- GEN_STD: Erzeugungsschritt für Streckendaten
- STD_OT: Ausgabeschritt für Streckendaten
- GEN_STA: Erzeugungsschritt für Streckenatlas
- STA_IN: Eingabeschritt für Streckenatlas
- FPL_IN: Eingabeschritt für Fahrplan
- SEN_OB: Erfassungsschritt für Objekte
- IDF_OB: Erkennungsschritt für Objekte
- IDF_HD: Erkennungsschritt für Hindernisse
- CRT?: Abfrageschritt für kritisches Hindernis
- STP?: Abfrageschritt für Verfahrensende
- FZ?: Abfrageschritt für Fahrzeug im Einsatz
- E_OT: Ausgabeschritt für Ergebnis
- E_IN: Eingabeschritt für Ergebnis

## Patentansprüche

1. Verfahren zur Erprobung der Hinderniserkennung eines Fahrzeugs (FZ) auf einer Teststrecke (TS),
**dadurch gekennzeichnet,**
**dass** als Hindernis mindestens ein Probekörper (PK1 ... PK3) verwendet wird,
• der zur Durchführung einer Hinderniserkennung in den vorgesehenen Fahrweg des Fahrzeugs (FZ) hineinbewegt wird,
• und der zur Vermeidung einer Kollision des Fahrzeugs (FZ) mit dem Probekörper (PK1 ... PK3) aus dem Fahrweg herausbewegt wird.

2. Verfahren nach Anspruch 1
**dadurch gekennzeichnet,**
**dass** die Teststecke spurgebunden ist und der Fahrweg durch ein Lichtraumprofil (LRP1 ... LRP2) vorgegeben wird.

3. Verfahren nach einem der voranstehenden Ansprüche,
**dadurch gekennzeichnet,**
**dass** der mindestens eine Probekörper (PK1 ... PK3) rechnergestützt automatisch in den vorgesehenen Fahrweg hineinbewegt und/oder herausbewegt wird.

4. Verfahren nach Anspruch 3,
**dadurch gekennzeichnet,**
**dass** der mindestens eine Probekörper (PK1 ... PK3) unter Berücksichtigung einer ermittelten Fahrzeugposition in den vorgesehenen Fahrweg hineinbewegt und/oder herausbewegt wird.

5. Verfahren nach einem der voranstehenden Ansprüche,
**dadurch gekennzeichnet,**
**dass** das Fahrzeug (FZ) eine Nachricht erhält, dass das Verfahren zur Erprobung der Hinderniserkennung durchgeführt wird.

6. Verfahren nach einem der voranstehenden Ansprüche,
**dadurch gekennzeichnet,**
**dass** das Ergebnis der Hinderniserkennung rechnergestützt ausgewertet wird.

7. Verfahren nach Anspruch 6,
**dadurch gekennzeichnet,**
**dass** das Ergebnis der Hinderniserkennung zumindest unter Berücksichtigung des örtlichen oder zeitlichen Abstandes ausgewertet wird, den das Fahrzeug (FZ) bei der Erkennung des Hindernisses von dem Probekörper (PK1 ... PK3) aufweist.

8. Verfahren nach Anspruch 5, 6 oder 7,
**dadurch gekennzeichnet,**
**dass** das Ergebnis der Hinderniserkennung zumindest unter Berücksichtigung der erkannten Art des Hindernisses in Bezug auf die Art des Probekörpers (PK1 ... PK3) ausgewertet wird.

9. Verfahren nach Anspruch 8,
**dadurch gekennzeichnet,**
**dass** für den örtlichen oder zeitlichen Abstand ein Mindestabstand (SCA) oder ein Detektionsfenster (DW) vorgegeben wird, vor dem oder in dem das Ergebnis der Hinderniserkennung erzeugt werden muss.

10. Verfahren nach einem der voranstehenden Ansprüche,
**dadurch gekennzeichnet,**
**dass** der mindestens eine Probekörper (PK1 ... PK3) in den Fahrweg hineingeschwenkt und herausgeschwenkt wird.

11. Verfahren nach einem der voranstehenden Ansprüche,
**dadurch gekennzeichnet,**
**dass** auf der Teststrecke (TS) das Entstehen von nicht durch Probekörper (PK1 ... PK3) gebildeten Hindernissen verhindert wird.

12. Teststrecke (TS) zur Erprobung der Hinderniserkennung eines Fahrzeugs (FZ)
**dadurch gekennzeichnet,**
**dass** als Hindernis mindestens ein Probekörper (PK1 ... PK3) verwendet wird,
• der zur Durchführung einer Hinderniserkennung in den vorgesehenen Fahrweg des Fahrzeugs (FZ) hineinbewegbar ist,
• und der zur Vermeidung einer Kollision des Fahrzeugs mit dem Probekörper (PK1 ... PK3) aus dem Fahrweg herausbewegbar ist, wobei die Teststrecke (TS) eingerichtet ist, ein Verfahren gemäß einem der voranstehenden Ansprüche durchzuführen.

13. Teststrecke (TS) nach Anspruch 12,
**dadurch gekennzeichnet,**
**dass** dieser integrativer Bestandteil eines Verkehrsnetzes für das Fahrzeug (FZ) ist.

14. Computerprogrammprodukt mit Programmbefehlen zur Durchführung des Verfahrens nach einem der Ansprüche 1 - 11.

15. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.
